# EUROPÄISCHE PATENTSCHRIFT

(11) **EP 3 475 020 B1**
(45) Veröffentlichungstag und Bekanntmachung des Hinweises auf die Patenterteilung: **01.07.2020**
(21) Anmeldenummer: 17733838.1
(22) Anmeldetag: 28.06.2017
(51) Int. Cl.: B23D 77/02, B23D 77/04, B23C 5/20, B23C 5/24

(54) **SPANABHEBENDES MASCHINENWERKZEUG, INSBESONDERE MASCHINENREIBWERKZEUG**
METAL-CUTTING MACHINE TOOL, IN PARTICULAR REAMING MACHINE TOOL
MACHINE-OUTIL D'USINAGE PAR ENLÈVEMENT DE COPEAUX, EN PARTICULIER MACHINE-OUTIL D'ALÉSAGE

(30) Priorität: 28.06.2016 DE 102016111805
(43) Veröffentlichungstag der Anmeldung: 01.05.2019
(73) Patentinhaber: Komet Group GmbH, 74354 Besigheim (DE)
(72) Erfinder: DUBS, Waldemar, 70806 Kornwestheim (DE); SCHMID, Steffen, 74366 Kirchheim (DE); PETERS, Frederik, 70469 Stuttgart (DE)
(74) Vertreter: Pfiz, Thomas
(86) Internationale Anmeldenummer: PCT/EP2017/066041
(87) Internationale Veröffentlichungsnummer: WO 2018/002163

(56) Entgegenhaltungen:
- EP-A1- 1 184 116
- EP-A1- 1 862 240
- EP-A1- 2 979 798
- DE-T2- 60 006 017
- US-A1- 2004 172 828
- US-A1- 2007 071 559
- US-A1- 2015 158 090

## Beschreibung

Die Erfindung betrifft ein spanabhebendes Maschinenwerkzeug gemäß dem Oberbegriff des Anspruchs 1. Ein ähnliches Maschinenwerkzeug ist aus der US2015/158090A1 bekannt.

Für die spanende Bearbeitung, insbesondere die Bearbeitung von Metall, aber auch von Kunst-, Faser- und Verbundstoffen, haben sich Maschinenwerkzeuge mit auswechselbaren (lösbaren) Schneidplatten bewährt. Diese kommen unter anderem beim Bohren, Fräsen, Drehen und Reiben zum Einsatz. Insbesondere das Reiben stellt einen hohen Anspruch an die Genauigkeit des Maschinenwerkzeugradius bzw. an die radiale Positionsgenauigkeit der Schneide relativ zum Grundkörper bzw. zur Werkzeug/Drehachse. Beim Reiben hat der Radius, auf dem die Schneide liegt, direkten Einfluss auf den erzeugten Durchmesser der Bohrung und somit die Präzision und ggf. Lebensdauer des Maschinenwerkzeugs.

Je nach Typ des Maschinenwerkzeugs und des Plattenelementes sowie der Herstellungsart, hängt die erreichbare radiale Positionsgenauigkeit der Schneidkante von verschiedenen Fertigungstoleranzen ab, u.a. Fertigungstoleranzen in Bezug auf die Position der Widerlager und auf die Geometrie des Plattenelementes. Bei Maschinenwerkzeugen mit beschichteten Schneidplatten hat die Schichtdicke und die Schichtdickenvarianz der Beschichtung einen weiteren Einfluss auf die radiale Position der Schneide. Die Summe der Fertigungstoleranzen ergibt die Abweichung der radialen Position der Schneide, die sich bei unterschiedlichen Schneidplatten ergeben kann. Diese Toleranzen schränken die Präzision des Werkzeuges ein. Schichtdicken bei bekannten Schneidplatten liegen je nach Anwendungsgebiet und Beschichtungsverfahren im Bereich von 0,5µm bis 50µm. Hierbei können je nach Beschichtungsverfahren Toleranzen von einigen Mikrometern auftreten. Dabei wirkt sich in der Regel die Schichtdickenvarianz doppelt auf die radiale Lage der Schneidkante aus. Der Abstand von der Anlagefläche sowie der Freifläche vom Mittelpunkt der Schneidplatte nehmen zu.

Dies führt dazu, dass in bestimmten Fällen, wenn z.B. das Wiederlager ungefähr orthogonal zur Verbindungslinie zwischen Mittelachse und Schneidkante des Werkzeuges liegt, der Durchmesser des Maschinenwerkzeugs bis zu viermal so stark wie die Varianz der Beschichtungsdicke schwankt. Somit kann allein die Toleranz der Schichtdicke einen relativen großen Anteil an der benötigten Gesamttoleranz des montierten Maschinenwerkzeugs darstellen. Bei den engen Toleranzen, die bei Maschinenwerkzeug für das Reiben gefordert sind, kann dies zu Ausschuss führen. Das Maschinenwerkzeug würde die Funktion nicht mehr erfüllen, also z.B. eine zu große oder zu kleine Bohrung erzeugen bzw. eine zu geringe Standzeit aufweisen. Sind mehrere Plattenelemente auf dem Maschinenwerkzeug positioniert, führen Schwankungen in der Schichtdicke zu Rundlauffehlern. Durch die unterschiedliche radiale Lage der Schneiden kann sich die Last durch den Zerspanprozess ungleichmäßig auf die Schneiden verteilen. Weiterhin kann es zu einer Schwingungsanregung kommen, da sich der fiktive Mittelpunkt der Schneidkanten durch den Rundlauffehler von der Rotationsachse des Maschinenwerkzeugs wegbewegen kann. Bei Werkzeug, welche durch die Plattenelemente geführt wird, kann der Rundlauffehler somit in einer Taumelbewegung resultieren.

Ausgehend hiervon liegt der Erfindung die Aufgabe zugrunde, die im Stand der Technik bekannten Maschinenwerkzeuge zur Vermeidung der vorgenannten Nachteile weiter zu verbessern und die Positionierung von beschichteten Schneidplatten exakt und mit vergleichsweise geringem Aufwand zu ermöglichen.

Zur Lösung dieser Aufgabe wird die in im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine Kompensation von Beschichtungstoleranzen zu ermöglichen. Dementsprechend wird erfindungsgemäß vorgeschlagen, dass der Plattensitz eine zu der Drehachse hin weisende Positionierfläche aufweist, und dass die Schneidplatte eine gegen die Positionierfläche anliegende, von der Drehachse abgewandte Referenzfläche zur radialen Lagebestimmung ihrer Schneidkante aufweist, wobei die Beschichtung auch auf die Referenzfläche aufgebracht ist. Da aufgrund der einheitlichen Beschichtung die Schichtdicke entlang der Schneide und die Schichtdicke der Referenzfläche in etwa konstant ist, bleibt durch die Flächenpaarung mit der Positionierfläche auch die radiale Lage der Schneidkante unabhängig von der Schichtdicke. D.h., die Schichtdicke und deren Toleranz hat keinen oder nur einen geringen Einfluss auf die Position der Schneidkante und die Präzision des Maschinenwerkzeugs. Damit können Schneidplatten, die im unbeschichteten Zustand weitgehend identische Abmaße besitzen und mit unterschiedlich dicken Beschichtungen versehen sind, in einem gegebenen Maschinenwerkzeug mit hoher Wiederholpräzision eingesetzt werden. Es müssen somit keine unterschiedlichen Rohlinge für unterschiedliche Beschichtungsdicken vorbereitet werden. Weiterhin muss die Dicke der Beschichtung nicht genau bekannt sein. Die Position der Schneide weicht zwischen Schneidplatten mit unterschiedlicher Beschichtung nicht ab. Auf diese Weise lassen sich die Präzision von Maschinenwerkzeugen zum Reiben mit beschichteten Schneidplatten erhöhen und der Fertigungsaufwand reduzieren sowie die Standzeit erhöhen.

Des Weiteren liegt die Referenzfläche quer, insbesondere orthogonal, zu einer durch den radial äußeren Punkt der Schneidkante und die Drehachse verlaufenden kürzesten Verbindungslinie. Damit lässt sich der radiale Ausgleich optimieren.

Zudem schließt die Verbindungslinie einen kleinsten Winkel im Bereich von 80° bis 90° mit der Referenzfläche ein.

Günstig ist es auch, wenn der Plattensitz eine tangentiale Stützfläche zur Aufnahme von Zerspankräften aufweist, wobei die tangentiale Stützfläche möglichst parallel zu einer durch die Drehachse und den radial äußeren Punkt der Schneidkante aufgespannten Ebene liegen sollte. Denkbar sind auch leicht geneigte Anordnungen, wobei die Stützfläche mit der genannten Ebene einen kleinsten Winkel zwischen 0° und 20°, vorzugsweise zwischen 0° und 10° einschließen sollte.

Vorteilhafterweise besitzt die Schneidplatte ein Substrat aus Hartmetall oder Cermet, um eine hohe Standzeit zu gewährleisten.

Grundsätzlich ist es auch möglich, dass die Schneidplatte eine auf einem Substrat aufgelötete Schneide aufweist, wobei zumindest deren Schneidkante mit der Beschichtung versehen ist.

Eine weitere vorteilhafte Ausgestaltung sieht vor, dass die Beschichtung als Hartstoffbeschichtung, insbesondere als keramische Hartstoffbeschichtung oder Diamantbeschichtung ausgebildet ist und eine Härte von mehr als 800HV aufweist.

Besonders vorteilhaft ist es, wenn die Schichtdicke der Beschichtung an der Schneidkante und an der Referenzfläche im Wesentlichen übereinstimmt und im Bereich von 0,5 bis 50 µm, vorzugsweise 1 bis 30 µm liegt.

In konstruktiver Hinsicht ist es besonders vorteilhaft, wenn die Referenzfläche an einem abgestuften Winkelstück der Schneidplatte angeordnet ist, so dass das Winkelstück im Einbauzustand der Schneidplatte in den Plattensitz hineinragt.

Eine weitere Verbesserung sieht vor, dass der Plattensitz eine in Richtung der Drehachse weisende axiale Stützfläche für eine Bodenfläche der Schneidplatte aufweist, und dass die Positionierfläche in einer an die Stützfläche angrenzenden Vertiefung angeordnet ist.

Um eine zuverlässig Kompensation bei austauschbaren Plattenelementen zu erreichen, ist es von Vorteil, wenn das Befestigungsmittel für die Schneidplatte lösbar ist und im Einbauzustand eine gegen die Positionierfläche gerichtete Kraftkomponente auf die Schneidplatte aufbringt.

In diesem Zusammenhang ist es auch vorteilhaft, wenn das Befestigungsmittel durch mindestens ein Element aus der Gruppe Klemmschraube, Klemmfeder, Klemmkeil, Klemmpratze gebildet ist.

Um eine exakt definierte, kippfreie Abstützung zu gewährleisten, ist es von Vorteil, wenn die Positionierfläche und die Referenzfläche eben oder gekrümmt ausgebildet sind und als Flächenpaarung flächig gegeneinander anliegen. Denkbar sind allerdings auch punkt- oder linienförmige Abstützungen.

Ein weiterer Einsatzvorteil ergibt sich dadurch, dass die Schneidkante im unbeschichteten Zustand der Schneidplatte auf ein Nennmaß geschliffen ist. Das Werkzeug kann somit direkt auf den gewünschten Durchmesser geschliffen werden, wobei die Schichtdicke beim Schleifen der Schneidplatten bzw. bei der Herstellung der Plattensitze nicht vorgehalten werden muss. Eine Erhöhung des Gebrauchsnutzens lässt sich dadurch erreichen, dass die Schneidplatte mindestens zwei wechselweise in Einsatz bringbare Schneidkanten und zugeordnete Referenzflächen aufweist.

Vorteilhafterweise besitzt die Schneidplatte eine Freiflächenfase an der Schneidkante, wobei die Freiflächenfase und die Referenzfläche eine, vorzugsweise durch eine Profilschleifscheibe gemeinsam eingeschliffene, übereinstimmende Orientierung aufweisen. Somit können diese Flächen in einem gemeinsamen Schleifprozess erzeugt werden. Daraus resultiert eine sehr hohe Genauigkeit der Flächen zueinander und somit eine sehr hohe Widerholpräzision beim Austausch zweier Plattenelemente, welche in dem gleichen Schleifprozess erzeugt wurden.

Um eine direkte Abstützung zu ermöglichen, der Plattensitz durch eine der Drehachse zugewandte Oberfläche des Grundkörpers gebildet sein.

Um einen Plattenwechsel zu erleichtern, ist es von Vorteil, wenn der Plattensitz zumindest teilweise durch einen an dem Grundkörper austauschbar fixierbaren Schneidplattenhalter, insbesondere eine Kassette gebildet ist. Dabei sind auch verschieden große Kassetten für unterschiedliche Schneidkörper einsetzbar.

Eine weitere Verbesserung sieht vor, dass die Lage der Positionierfläche durch Verstellmittel gegebenenfalls unter gezielter Deformation des Grundkörpers einstellbar ist.

Um eine Schichtdickenkompensation ohne zusätzliche axiale Verlagerung zu ermöglichen, ist es vorteilhaft, wenn der Plattensitz an der der Drehachse zugewandten Seite der Schneidplatte einen Freiraum für eine von der Dicke der Beschichtung abhängige radiale Ausgleichsverlagerung der Schneidplatte aufweist.

In diesem Zusammenhang ist es auch von Vorteil, wenn die Schneidplatte an ihrer der Drehachse zugewandten Seite von einer der Drehachse abgewandten starren Gegenfläche des Plattensitzes beabstandet bleibt und nur durch das Befestigungsmittel abgestützt ist.

Im Folgenden wird die Erfindung anhand der in der Zeichnung schematisch dargestellten Ausführungsbeispiele näher erläutert. Es zeigen:
- Fig. 1: ein Maschinenreibwerkzeug mit in Plattensitzen eines Grundkörpers eingesetzten beschichteten Schneidplatten in perspektivischer Darstellung;
- Fig. 2: einen Teilschnitt durch eine mit einer radialen Referenzfläche versehene Schneidplatte entlang der Linie 2-2 der Fig. 1;
- Fig. 3: eine Vorderseitenansicht einer Ausführungsform eines Reibwerkzeugs mit Schneidplatten in Kassetten;
- Fig. 4: einen Teilschnitt entlang der Linie 4-4 der Fig. 3;
- Fig. 5 und 6: eine weitere Ausführungsform eines Reibwerkzeugs mit gegen eine Positionierfläche schraubverspannten Schneidplatten im Axialschnitt und in einer Ausschnittsvergrößerung;
- Fig. 7 und 8: eine Ausführungsform eines Reibwerkzeugs mit gegen eine jeweilige Positionierfläche federverspannten Schneidplatten in Stirnseitenansicht und in einem Axialschnitt entlang der Linie 8-8 der Fig. 7;
- Fig. 9: eine beschichtete Wendeschneidplatte mit Referenzfläche im Schnitt;
- Fig. 10: eine Stirnseitenansicht der Wendeschneidplatte nach Fig. 9 in skizzierter Einbauposition;
- Fig. 11,12; 13,14 und 15, 16: weitere Ausführungsformen von beschichteten Wendeschneidplatten mit Referenzfläche in Fig. 9 und 10 entsprechenden Darstellungen.

Die in der Zeichnung dargestellten Reibwerkzeuge 10 lassen sich für die Feinbearbeitung einer vorgefertigten Bohrung in einem Werkstück mittels einer Werkzeugmaschine um eine Dreh- bzw. Werkzeugachse 12 rotierend antreiben und dabei axial vorschieben, um eine Reibzugabe spanabhebend abzutragen und so eine passgenaue Bohrung mit hoher Oberflächengüte zu erzeugen. Die Werkzeugachse 12 kann jedoch auch eine Rotationsachse für ein Werkstück sein, das zur Bearbeitung mit einem stillstehenden Maschinenwerkzeug um die Werkzeugachse rotierend bewegt wird.

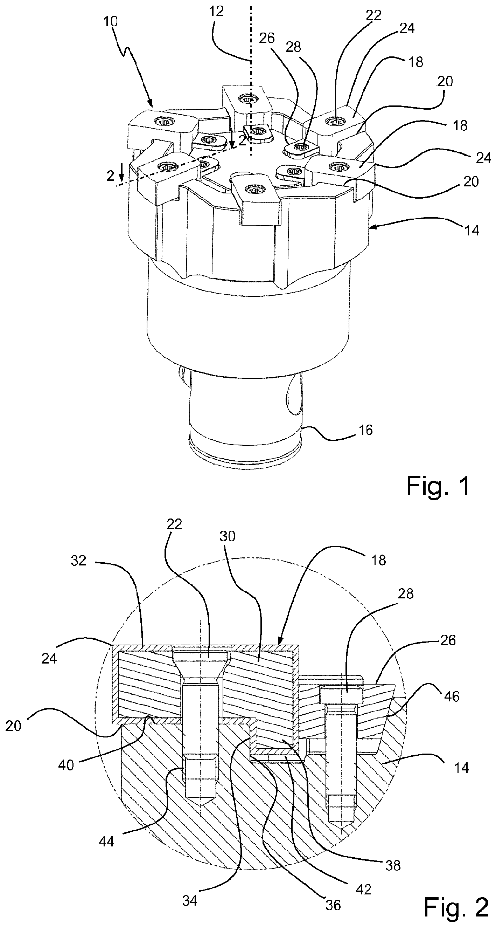

Wie in Fig. 1 und 2 gezeigt, weist das Reibwerkzeug 10 einen Grundkörper 14 auf, der an seinem hinteren Ende über eine Schnittstelle 16 mit einer an eine Maschinenspindel anschließbaren Aufnahme verbindbar ist. Am vorderen Ende des Grundkörpers 14 ist eine Mehrzahl von Schneidplatten 18 in Umfangsrichtung verteilt in jeweiligen Plattensitzen 20 mittels Klemmschrauben 22 fixiert. Die radial äußeren aktiven Schneidkanten 24 dieser Schneidplatten 18 laufen auf einem zu der Werkzeugachse 12 koaxialen gemeinsamen Schneidkreis um.

Ein Plattensitz 20 bietet eines oder mehrere Widerlager, an welche die zugeordnete Schneidplatte 18 direkt angelegt wird. Die Berührung zwischen Widerlager und Schneidplatte 18 kann allgemein als Flächen-, Linien- oder Punktberührung ausfallen. Dabei sind die Widerlager so positioniert, dass die Schneidplatte 18 durch die Kraftbeaufschlagung im Anwendungsfall (Zerspankräfte) gegen eines oder mehrere Widerlager gedrückt wird, also die Widerlagerflächen zusätzlich zur Positionierung der Schneidplatte 18 die Zerspankräfte aufnehmen und an den Grundkörper 14 weitergeben.

Zur zusätzlichen radialen Einspannung der Schneidplatten 18 sind jeweilige Klemmkeile 26 vorgesehen, die ebenfalls mittels Schrauben 28 axial in den Grundkörper 14 einziehbar sind, wie es unten näher beschrieben wird.

Wie aus Fig. 2 ersichtlich, bestehen die Schneidplatten 18 aus einem Trägerkörper bzw. Substrat 30 beispielsweise aus Hartmetall oder Cermet und einer vollflächig auf dessen Außenseite aufgebrachten Hartstoffbeschichtung 32. Diese kann eine Schichtdicke beispielsweise im Bereich von 1 bis 30 µm aufweisen, deren Toleranz ohne kompensatorische Maßnahmen die radiale Lage der Schneidkante 24 beeinflussen würde. Um dies zu vermeiden, weist die Schneidplatte 18 eine Referenzfläche 34 auf, die ebenso wie die Schneidkante 24 auch mit der Beschichtung 32 versehen ist und gegen eine Positionierfläche 36 im Bereich des Plattensitzes 20 anliegt.

Die Lagebestimmung bzw. -kompensation erfolgt dadurch, dass die Positionierfläche 36 radial nach innen zu der Werkzeugachse 12 hin orientiert ist, während die beschichtete Referenzfläche 34 von der Werkzeugachse 12 weg radial nach außen weist, so dass je nach Dicke der Beschichtung 32 ein entsprechender Ausgleich der radialen Lage der Schneidkante 24 erreicht wird. Zu diesem Zweck ist es vorteilhaft, wenn die Referenzfläche 34 orthogonal zu einer durch den radial äußeren Punkt der Schneidkante 24 und durch die Drehachse 12 auf kürzester Strecke verlaufenden- gedachten - Verbindungslinie liegt.

Zweckmäßig lässt sich eine solche kompensatorische Flächenpaarung durch eine Abstufung bzw. ein Winkelstück 38 der Schneidplatte 18 realisieren, wobei das das Winkelstück 38 im Einbauzustand der Schneidplatte 18 in den Plattensitz 20 hineinragt. Hierfür ist es günstig, wenn der Plattensitz 20 eine in Richtung der Drehachse 12 weisende axiale Stützfläche 40 für eine Bodenfläche der Schneidplatte 18 aufweist, so dass die Positionierfläche 36 in einer an die Stützfläche 40 angrenzenden Vertiefung 42 angeordnet werden kann.

Wie aus Fig. 2 auch ersichtlich, ist die Klemmschraube 22 in der Gewindebohrung des Grundkörpers 14 unter der axialen Stützfläche 40 exzentrisch zu dem Durchbruch der Schneidplatte 18 geführt, wodurch eine gegen die Positionierfläche 36 gerichtete Kraftkomponente aufgebracht wird. Um die Flächenpressung zu unterstützen und eine zuverlässige radiale Abstützung der Schneidplatte sicherzustellen, lässt sich der Klemmkeil 26 an der Keilschräge 46 mittels der Schraube 28 festklemmen. Durch die Keilklemmung ergibt sich eine zusätzliche Abstützung der Schneidplatte 18 gegen Radialkräfte aus dem Zerspanungsprozess.

Bei den folgenden Ausführungsbeispielen sind gleiche
oder ähnliche Teile mit denselben Bezugszeichen versehen, wie vorstehend beschrieben.

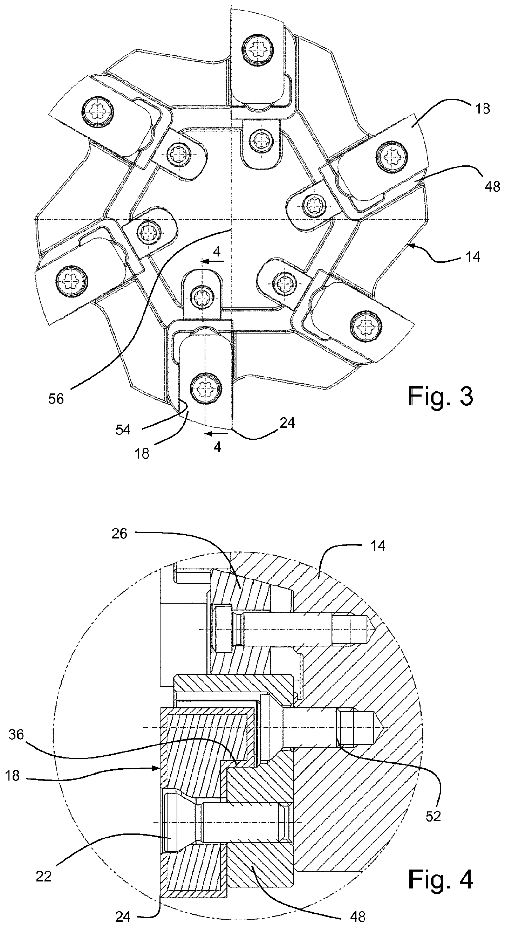

Fig. 3 und 4 zeigen eine Ausführungsform mit Kassetten 48 zur mittelbaren Halterung der Schneidplatten 18 an dem Grundkörper 14. Hier ist die Positionierfläche 36 als Teil des Plattensitzes in der jeweiligen Kassette 48 ausgebildet. Die Kassetten 48 sind mittels Schrauben 52 an dem Grundkörper 14 fixierbar und durch die Klemmkeile 26 als Verstellmittel radial justierbar abgestützt. Die Schneidplatten 18 lassen sich durch Lösen ihrer Klemmschraube 22 bei Bedarf einfach austauschen. Denkbar ist es auch, dass die Kassetten 48 wahlweise in unterschiedlichen Größen für unterschiedliche Schneidplatten 18 an dem Grundkörper 14 angebaut werden.

Wie aus Fig. 3 auch zu ersehen, umfasst der Plattensitz eine Stützfläche 54 mit tangentialer Flächennormale zur Aufnahme von an der Schneidkante 24 eingeleiteten Tangentialkräften. Diese tangentiale Stützfläche 54 sollte möglichst parallel zu einer durch die Drehachse und den radial äußeren Punkt der Schneidkante aufgespannten Ebene 56 liegen, so dass durch Beschichtungstoleranzen der Schneidplatte 18 nur eine Tangentialverstellung, jedoch keine nennenswerte Radialverstellung der Schneidkante 24 erfolgt.

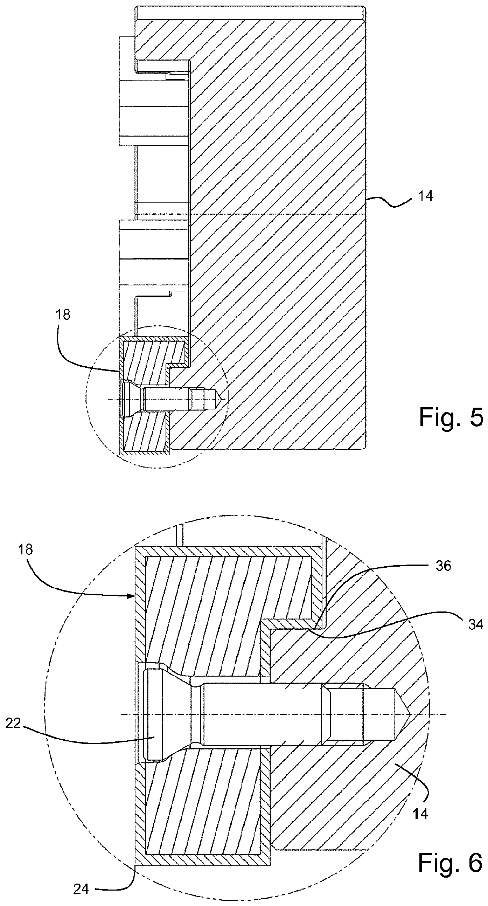

Fig. 5 und 6 zeigen ein besonders einfaches Ausführungsbeispiel, bei welchem die Schneidplatten jeweils nur durch eine Klemmschraube 22 ohne zusätzliche Elemente in dem Grundkörper 14 gehalten sind. Auch hier wird durch eine exzentrische Schraubdurchführung eine radiale Verspannung der Referenzfläche 34 gegen die Positionierfläche 36 erreicht.

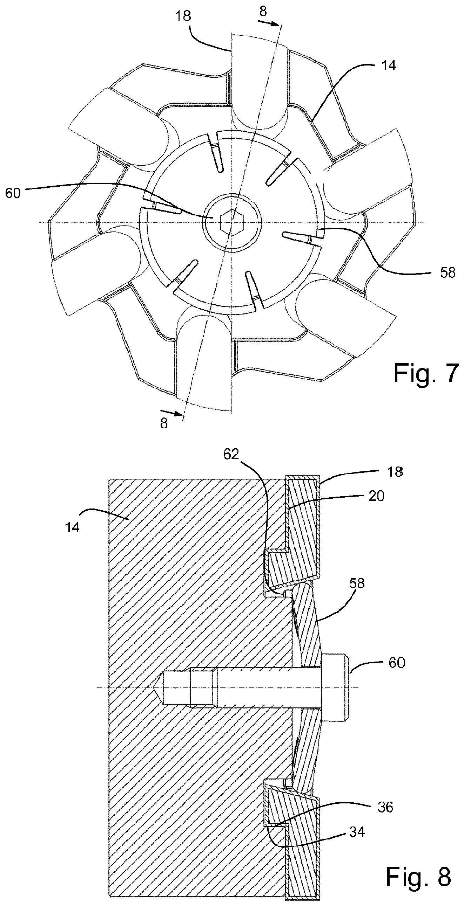

Das Ausführungsbeispiel nach Fig. 7 und 8 ist dahingehend optimiert, dass die Schneidplatten 18 nicht durch Querdurchbrüche für Klemmschrauben geschwächt sind, sondern durch Segmente einer ringförmigen Blattfeder 58 in ihren jeweiligen Plattensitzen in dem Grundkörper 14 eingespannt sind. Durch diese Lösung lässt sich auch der Fertigungs- und Montageaufwand reduzieren. Die Blattfeder 58 ist durch eine Zentralschraube 60 axial verspannbar, wobei die Federsegmente mit Nasen 62 in den Plattensitzen 20 gehalten sind. Die Überbestimmung bei mehr als drei Schneidplatten 18 sowie geometrische Abweichungen werden durch den "Federweg" ausgeglichen.

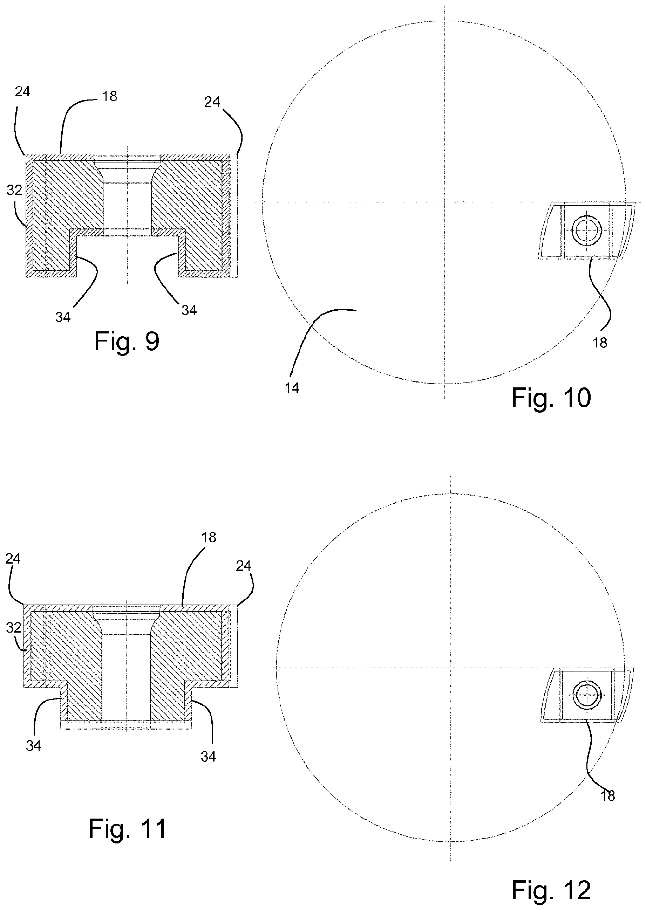

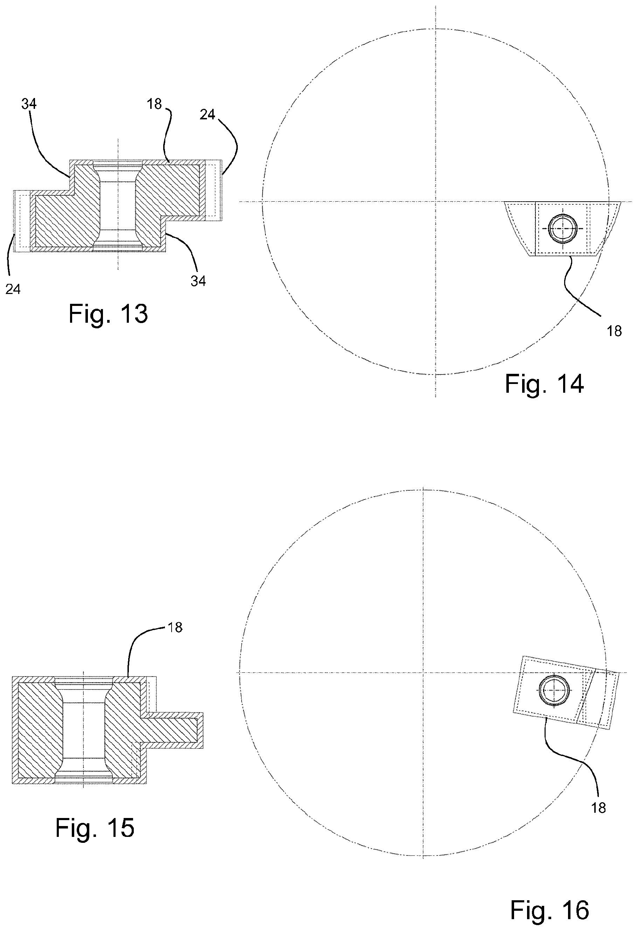

Die Fig. 9 bis 16 zeigen verschiedene Ausführungsformen mit als Wendeschneidplatten ausgebildeten Schneidplatten 18. Diese besitzen jeweils zwei Schneidkanten 24, die durch Lösen der Klemmschraube und geeignetes Wenden der Schneidplatte wechselweise in Einsatz bringbar sind. Die exakte radiale Positionierung ist trotz der Beschichtung 32 dadurch gewährleistet, dass jeder Schneidkante 24 eine Referenzfläche 34 zugeordnet ist, die mit der Positionierfläche 36 an dem Grundkörper 14 in Anlage bringbar ist.

Um enge Toleranzen zu halten, können die Schneidplatten 18 ganz oder teilweise geschliffen werden. In einem weiteren Vorgehen wird die Durchmessergenauigkeit dadurch erhöht, dass die Schneidplatten auf dem Grundkörper 14 montiert werden und das Maschinenwerkzeug 10 um die Rotationsachse 12 rotierend auf den gewünschten Durchmesser geschliffen wird. Die Schneidplatten 18 werden dann in einem nächsten Schritt für das Beschichten wieder abmontiert. Bei diesem Vorgehen braucht bei dem Schleifprozess das zu erwartende Aufmaß durch die nachfolgende Beschichtung im Schleifmaß vorgehalten zu werden.

## Patentansprüche

1. Spanabhebendes Maschinenwerkzeug, insbesondere Maschinenreibwerkzeug (10), mit einem um eine Drehachse (12) relativ zu einem zu bearbeitenden Werkstück drehbaren Grundkörper (14), mit mindestens einem an dem Grundkörper (14) außerhalb der Drehachse (12) angeordneten Plattensitz (20), und mit einer in den Plattensitz (20) eingesetzten und darin durch mindestens ein Befestigungsmittel (22) gehaltenen Schneidplatte (18), die zumindest im Bereich ihrer Schneidkante (24) mit einer Beschichtung (32) versehen ist, wobei der Plattensitz (20) eine zu der Drehachse (12) hin weisende Positionierfläche (36) aufweist, und dass die Schneidplatte (18) eine gegen die Positionierfläche (36) anliegende, von der Drehachse (12) abgewandte Referenzfläche (34) zur radialen Lagebestimmung ihrer Schneidkante (24) aufweist, wobei die Beschichtung (32) auch auf die Referenzfläche (34) aufgebracht ist, wobei die Referenzfläche (34) quer zu einer durch den radial äußeren Punkt der Schneidkante (24) und die Drehachse (12) verlaufenden kürzesten Verbindungslinie liegt, **dadurch gekennzeichnet, dass** die Verbindungslinie einen kleinsten Winkel im Bereich von 80° bis 90° mit der Referenzfläche (34) einschließt.

2. Spanabhebendes Maschinenwerkzeug nach Anspruch 1, **dadurch gekennzeichnet, dass** die Referenzfläche (34) orthogonal zu der Verbindungslinie liegt.

3. Spanabhebendes Maschinenwerkzeug nach Anspruch 1 oder 2, **dadurch gekennzeichnet, dass** der Plattensitz (20) eine tangentiale Stützfläche (54) aufweist, wobei die tangentiale Stützfläche (54) parallel zu einer durch die Drehachse (12) und den radial äußeren Punkt der Schneidkante (24) aufgespannten Ebene liegt oder mit der Ebene einen kleinsten Winkel zwischen 0° und 20°, vorzugsweise zwischen 0° und 10° einschließt.

4. Spanabhebendes Maschinenwerkzeug nach einem der Ansprüche 1 bis 3, **dadurch gekennzeichnet, dass** die Schneidplatte (18) ein Substrat (30) aus Hartmetall oder Cermet aufweist.

5. Spanabhebendes Maschinenwerkzeug nach einem der Ansprüche 1 bis 3, **dadurch gekennzeichnet, dass** die Schneidplatte (18) eine auf einem Substrat (30) aufgelötete Schneide aufweist, wobei zumindest deren Schneidkante (24) mit der Beschichtung (32) versehen ist.

6. Spanabhebendes Maschinenwerkzeug nach einem der Ansprüche 1 bis 5, **dadurch gekennzeichnet, dass** die Beschichtung (32) als Hartstoffbeschichtung, insbesondere als keramische Hartstoffbeschichtung oder Diamantbeschichtung ausgebildet ist und eine Härte von mehr als 800HV aufweist.

7. Spanabhebendes Maschinenwerkzeug nach einem der Ansprüche 1 bis 6, **dadurch gekennzeichnet, dass** die Schichtdicke der Beschichtung (32) an der Schneidkante (24) und an der Referenzfläche (34) im Wesentlichen übereinstimmt und im Bereich von 0,5 bis 50 µm, vorzugsweise 1 bis 30 µm liegt.

8. Spanabhebendes Maschinenwerkzeug nach einem der Ansprüche 1 bis 7, **dadurch gekennzeichnet, dass** die Referenzfläche (34) an einem abgestuften Winkelstück (38) der Schneidplatte (18) angeordnet ist, wobei das Winkelstück (38) im Einbauzustand der Schneidplatte (18) in den Plattensitz (20) hineinragt.

9. Spanabhebendes Maschinenwerkzeug nach einem der Ansprüche 1 bis 8, **dadurch gekennzeichnet, dass** der Plattensitz (20) eine in Richtung der Drehachse (12) weisende axiale Stützfläche (40) für eine Bodenfläche der Schneidplatte (18) aufweist, und dass die Positionierfläche (36) in einer an die axiale Stützfläche (40) angrenzenden Vertiefung angeordnet ist.

10. Spanabhebendes Maschinenwerkzeug nach einem der Ansprüche 1 bis 9, **dadurch gekennzeichnet, dass** das Befestigungsmittel (22) lösbar ist und im Einbauzustand eine gegen die Positionierfläche (36) gerichtete Kraftkomponente auf die Schneidplatte (18) aufbringt.

11. Spanabhebendes Maschinenwerkzeug nach einem der Ansprüche 1 bis 10, **dadurch gekennzeichnet, dass** das Befestigungsmittel (22) durch mindestens ein Element aus der Gruppe Klemmschraube, Klemmfeder, Klemmkeil, Klemmpratze gebildet ist.

12. Spanabhebendes Maschinenwerkzeug nach einem der Ansprüche 1 bis 11, **dadurch gekennzeichnet, dass** die Positionierfläche (36) und die Referenzfläche (34) eben oder gekrümmt ausgebildet sind und als Flächenpaarung flächig gegeneinander anliegen.

13. Spanabhebendes Maschinenwerkzeug nach einem der Ansprüche 1 bis 12, **dadurch gekennzeichnet, dass** die Schneidkante (24) im unbeschichteten Zustand der Schneidplatte (18) auf ein Nennmaß geschliffen ist.

14. Spanabhebendes Maschinenwerkzeug nach einem der Ansprüche 1 bis 13, **dadurch gekennzeichnet, dass** die Schneidplatte (18) mindestens zwei wechselweise in Einsatz bringbare Schneidkanten (24) und zugeordnete Referenzflächen (34) aufweist.

15. Spanabhebendes Maschinenwerkzeug nach einem der Ansprüche 1 bis 14, **dadurch gekennzeichnet, dass** die Schneidplatte (18) eine Freiflächenfase an der Schneidkante (24) besitzt, und dass die Freiflächenfase und die Referenzfläche (34) eine, vorzugsweise durch eine Profilschleifscheibe gemeinsam eingeschliffene, übereinstimmende Orientierung aufweisen.

16. Spanabhebendes Maschinenwerkzeug nach einem der Ansprüche 1 bis 15, **dadurch gekennzeichnet, dass** der Plattensitz (20) durch eine der Drehachse (12) zugewandte Oberfläche des Grundkörpers (14) gebildet ist.

17. Spanabhebendes Maschinenwerkzeug nach einem der Ansprüche 1 bis 15, **dadurch gekennzeichnet, dass** der Plattensitz (20) zumindest teilweise durch einen an dem Grundkörper (14) austauschbar fixierbaren Schneidplattenhalter (48), insbesondere eine Kassette gebildet ist.

18. Spanabhebendes Maschinenwerkzeug nach einem der Ansprüche 1 bis 17, **dadurch gekennzeichnet, dass** die Lage der Positionierfläche (36) durch Verstellmittel insbesondere unter gezielter Deformation des Grundkörpers (14) einstellbar ist.

19. Spanabhebendes Maschinenwerkzeug nach einem der Ansprüche 1 bis 18, **dadurch gekennzeichnet, dass** der Plattensitz (20) an der der Drehachse (12) zugewandten Seite der Schneidplatte (18) einen Freiraum für eine von der Dicke der Beschichtung (32) abhängige radiale Ausgleichsverlagerung der Schneidplatte (18) aufweist.

20. Spanabhebendes Maschinenwerkzeug nach einem der Ansprüche 1 bis 19, **dadurch gekennzeichnet, dass** die Schneidplatte (18) an ihrer der Drehachse (12) zugewandten Seite von einer Gegenfläche des Plattensitzes beabstandet bleibt und nur durch das Befestigungsmittel (22) abgestützt ist.

## Claims

1. Metal cutting machine tool, in particular reaming machine tool (10),
with a base body (14) rotatable around a rotational axis (12) relative to a workpiece to be processed, with at least one plate seat (20) arranged on the base body (14) outside the rotational axis (12), and with a cutting plate (18) inserted into the plate seat (20) and held therein by at least one fastening means (22), which cutting plate (18) is provided with a coating (32) at least in the region of its cutting edge (24), wherein the plate seat (20) has a positioning surface (36) facing to the rotational axis (12), and that the cutting plate (18) has a reference surface (34) abutting the positioning surface (36) and facing away from the rotational axis (12) for the radial positioning of its cutting edge (24), wherein the coating (32) is also applied to the reference surface (34), wherein the reference surface (34) is transverse to the shortest connecting line running through the radially outer point of the cutting edge (24) and the rotational axis (12), **characterized in that** the connecting line encloses a smallest angle in a range of 80° to 90° with the reference surface (34).

2. Metal cutting machine tool according to claim 1, **characterized in that** the reference surface (34) is orthogonal to the connecting line.

3. Metal cutting machine tool according to claim 1 or 2, **characterized in that** the plate seat (20) has a tangential support surface (54), wherein the tangential support surface (54) lies parallel to a plane spanned through the rotational axis (12) and the radially outer point of the cutting edge (24) or encloses a smallest angle between 0° and 20°, preferably between 0° and 10° with the plane.

4. Metal cutting machine tool according to any one of claims 1 to 3, **characterized in that** the cutting plate (18) comprises a substrate (30) of a hard metal or cermet.

5. Metal cutting machine tool according to any one of claims 1 to 3, **characterized in that** the cutting plate (18) has a cutting edge soldered to a substrate (30), wherein at least its cutting edge (24) is provided with a coating (32).

6. Metal cutting machine tool according to any one of claims 1 to 5, **characterized in that** the coating (32) is formed as a hard material coating, in particular as a ceramic hard material coating or a diamond coating, and has a hardness of more than 800 HV.

7. Metal cutting machine tool according to any one of claims 1 to 6, **characterized in that** the layer thickness of the coating (32) at the cutting edge (24) and on the reference surface (34) is substantially the same and is in a range of 0.5 to 50 µm, preferably 1 to 30 µm.

8. Metal cutting machine tool according to any one of claims 1 to 7, **characterized in that** the reference surface (34) is arranged on a stepped angle piece (38) of the cutting plate (18), wherein the angle piece (38) protrudes into the plate seat (20) in the mounted state of the cutting plate (18).

9. Metal cutting machine tool according to any one of claims 1 to 8, **characterized in that** the plate seat (20) has an axial support surface (40) for the bottom surface of the cutting plate (18), facing in the direction of the rotational axis (12), and that the positioning surface (36) is arranged in a recess adjacent to the axial support surface (40).

10. Metal cutting machine tool according to any one of claims 1 to 9, **characterized in that** the fastening means (22) is detachable, and in a mounted state, a force component directed against the positioning surface (36) is applied to the cutting plate (18).

11. Metal cutting machine tool according to any one of claims 1 to 10, **characterized in that** the fastening means (22) is formed by at least one element from the group of clamping screw, clamping spring, clamping wedge and clamping claw.

12. Metal cutting machine tool according to any one of claims 1 to 11, **characterized in that** the positioning surface (36) and the reference surface (34) are formed flat or curved and lie flat to each other as a surface pairing.

13. Metal cutting machine tool according to any one of claims 1 to 12, **characterized in that** the cutting edge (24) is ground to a nominal size in the uncoated state of the cutting plate (18).

14. Metal cutting machine tool according to any one of claims 1 to 13, **characterized in that** the cutting plate (18) has at least two alternately engageable cutting edges (24) and associated reference surfaces (34).

15. Metal cutting machine tool according to any one of claims 1 to 14, **characterized in that** the cutting plate (18) has a free-surface-bevel on the cutting edge (24), and that the free-surface-bevel and the reference surface (34) preferably have a matching orientation for grinding together by a reaming disc.

16. Metal cutting machine tool according to any one of claims 1 to 15, **characterized in that** the plate seat (20) is formed by a surface of the base body (14), facing the rotational axis (12).

17. Metal cutting machine tool according to any one of claims 1 to 15, **characterized in that** the plate seat (20) is formed by at least partially, replaceably fixable cutting plate holder (48) on the base body (14), in particular a cassette.

18. Metal cutting machine tool according to any one of claims 1 to 17, **characterized in that** the position of the positioning surface (36) is adjustable by an adjusting means, in particular under directed deformation of the base body (14).

19. Metal cutting machine tool according to any one of claims 1 to 18, **characterized in that** the plate seat (20) on the side of the cutting plate (18), facing the rotational axis (12), has a free space for a radial compensating displacement of the cutting plate (18), depending on the thickness of the coating (32).

20. Metal cutting machine tool according to any one of claims 1 to 19, **characterized in that** the cutting plate (18) on its side facing the rotational axis (12) remains at a distance from the opposite surface of the plate seat and is supported only by the fastening means (22).

## Revendications

1. Machine-outil d'usinage par enlèvement de copeaux, en particulier machine-outil d'alésage (10), comprenant un corps de base (14) pouvant tourner sur un axe de rotation (12) par rapport à une pièce à usiner, au moins un logement de plaquette (20) disposé sur le corps de base (14) à l'extérieur de l'axe de rotation (12), et une plaquette de coupe (18) insérée dans le logement de plaquette (20) et maintenue dans celui-ci par au moins un moyen de fixation (22), laquelle plaquette de coupe est pourvue d'un revêtement (32) au moins dans la région de son arête de coupe (24), dans laquelle le logement de plaquette (20) comprend une face de positionnement (36) orientée vers l'axe de rotation (12) et la plaquette de coupe (18) comporte une face de référence (34) s'appuyant contre la face de positionnement (36) et opposée à l'axe de rotation (12) pour la détermination de la position radiale de son arête de coupe (24), dans laquelle le revêtement (32) est également appliqué sur la face de référence (34), dans laquelle la face de référence (34) s'étend transversalement à la ligne de connexion la plus courte passant par le point extérieur radial de l'arête de coupe (24) et l'axe de rotation (12), **caractérisée en ce que** la ligne de connexion forme un angle très faible, dans la plage de 80° à 90°, avec la face de référence (34).

2. Machine-outil d'usinage par enlèvement de copeaux selon la revendication 1, **caractérisée en ce que** la face de référence (34) est perpendiculaire à la ligne de connexion.

3. Machine-outil d'usinage par enlèvement de copeaux selon la revendication 1 ou 2, **caractérisée en ce que** le logement de plaquette (20) comprend une face d'appui tangentielle (54), dans laquelle la face d'appui tangentielle (54) est parallèle à un plan formé par l'axe de rotation (12) et le point radialement extérieur de l'arête de coupe (24) ou forme avec le plan un angle très faible, compris entre 0° et 20°, de préférence entre 0° et 10°.

4. Machine-outil d'usinage par enlèvement de copeaux selon l'une des revendications 1 à 3, **caractérisée en ce que** la plaquette de coupe (18) comporte un substrat (30) en métal dur ou en cermet.

5. Machine-outil d'usinage par enlèvement de copeaux selon l'une des revendications 1 à 3, **caractérisée en ce que** la plaquette de coupe (18) comprend un bord tranchant soudé sur un substrat (30), dans laquelle au moins l'arête de coupe (24) de la plaquette de coupe est pourvue du revêtement (32).

6. Machine-outil d'usinage par enlèvement de copeaux selon l'une des revendications 1 à 5, **caractérisée en ce que** le revêtement (32) est conçu comme un revêtement en matériau dur, en particulier comme un revêtement en matériau dur en céramique ou un revêtement en diamant, et a une dureté supérieure à 800 HV.

7. Machine-outil d'usinage par enlèvement de copeaux selon l'une des revendications 1 à 6, **caractérisée en ce que** l'épaisseur de couche du revêtement (32) sur l'arête de coupe (24) et sur la face de référence (34) coïncident sensiblement et sont comprises dans la plage allant de 0,5 à 50 µm, de préférence de 1 à 30 µm.

8. Machine-outil d'usinage par enlèvement de copeaux selon l'une des revendications 1 à 7, **caractérisée en ce que** la face de référence (34) est disposée sur une pièce angulaire étagée (38) de la plaquette de coupe (18), dans laquelle la pièce angulaire (38) fait saillie dans le logement de plaquette (20) à l'état installé de la plaquette de coupe (18).

9. Machine-outil d'usinage par enlèvement de copeaux selon l'une des revendications 1 à 8, **caractérisée en ce que** le logement de plaquette (20) comporte une face d'appui axiale (40), orientée en direction de l'axe de rotation (12), pour une face inférieure de la plaquette de coupe (18), et **en ce que** la face de positionnement (36) est disposée dans un évidement adjacent à la face d'appui axiale (40).

10. Machine-outil d'usinage par enlèvement de copeaux selon l'une des revendications 1 à 9, **caractérisée en ce que** le moyen de fixation (22) est amovible et, à l'état installé, applique une composante de force dirigée contre la face de positionnement (36) sur la plaquette de coupe (18).

11. Machine-outil d'usinage par enlèvement de copeaux selon l'une des revendications 1 à 10, **caractérisée en ce que** le moyen de fixation (22) est formé par au moins un élément du groupe comprenant une vis de serrage, un ressort de serrage, un coin de serrage et une griffe de serrage.

12. Machine-outil d'usinage par enlèvement de copeaux selon l'une des revendications 1 à 11, **caractérisée en ce que** la face de positionnement (36) et la face de référence (34) sont planes ou incurvées et reposent à plat l'une contre l'autre en tant que paire de surfaces.

13. Machine-outil d'usinage par enlèvement de copeaux selon l'une des revendications 1 à 12, **caractérisée en ce que** l'arête de coupe (24) est affûtée à une dimension nominale lorsque la plaquette de coupe (18) n'est pas revêtue.

14. Machine-outil d'usinage par enlèvement de copeaux selon l'une des revendications 1 à 13, **caractérisée en ce que** la plaquette de coupe (18) comporte au moins deux arêtes de coupe (24) qui peuvent être utilisées alternativement et des faces de référence associées (34).

15. Machine-outil d'usinage par enlèvement de copeaux selon l'une des revendications 1 à 14, **caractérisée en ce que** la plaquette de coupe (18) comporte un chanfrein à surface libre sur l'arête de coupe (24) et **en ce que** le chanfrein à surface libre et la face de référence (34) ont une orientation correspondante, de préférence meulée ensemble par une meule à profiler.

16. Machine-outil d'usinage par enlèvement de copeaux selon l'une des revendications 1 à 15, **caractérisée en ce que** le logement de plaquette (20) est formé par une surface du corps de base (14) tournée vers l'axe de rotation (12).

17. Machine-outil d'usinage par enlèvement de copeaux selon l'une des revendications 1 à 15, **caractérisée en ce que** le logement de plaquette (20) est au moins partiellement formé par un support de plaquette de coupe (48), en particulier une cassette, qui peut être fixé de manière interchangeable sur le corps de base (14).

18. Machine-outil d'usinage par enlèvement de copeaux selon l'une des revendications 1 à 17, **caractérisée en ce que** la position de la face de positionnement (36) peut être réglée par des moyens de réglage, notamment en déformant de manière ciblée le corps de base (14).

19. Machine-outil d'usinage par enlèvement de copeaux selon l'une des revendications 1 à 18, **caractérisée en ce que** le logement de plaquette (20) comporte un espace libre pour un déplacement de compensation radial de la plaquette de coupe (18) en fonction de l'épaisseur du revêtement (32) sur le côté de la plaquette de coupe (18) tourné vers l'axe de rotation (12).

20. Machine-outil d'usinage par enlèvement de copeaux selon l'une des revendications 1 à 19, **caractérisée en ce que** la plaquette de coupe (18) sur son côté tourné vers l'axe de rotation (12) reste à distance d'une surface antagoniste du logement de plaquette et n'est soutenue que par le moyen de fixation (22).
